# EUROPEAN PATENT SPECIFICATION

(11) **EP 1 651 084 B1**
(45) Date of publication and mention of the grant of the patent: **10.09.2008**
(21) Application number: 04741239.0
(22) Date of filing: 22.07.2004
(51) Int. Cl.: A47J 27/10, A23L 1/01

(54) **ELECTRIC HOUSEHOLD APPLIANCE FOR STEAM COOKING**
ELEKTRISCHES HAUSHALTSGERÄT ZUM DAMPFKOCHEN
APPAREIL ELECTROMENAGER DE CUISSON A LA VAPEUR

(30) Priority: 23.07.2003 IT MI20031513
(43) Date of publication of application: 03.05.2006
(73) Proprietor: Bargiacchi, Roger Manuel, 1070 Bruxelles (BE)
(72) Inventor: Bargiacchi, Roger Manuel, 1070 Bruxelles (BE)
(74) Representative: Riccardi, Sergio
(86) International application number: PCT/EP2004/008251
(87) International publication number: WO 2005/013779

(56) References cited:
- DE-A- 2 713 399
- GB-A- 2 049 400
- US-B1- 6 550 372

## Description

The present invention is about an electric household appliance for food steam cooking, suitable in particular but not exclusively for preparing the so called scrambled eggs, which is of simple and economic manufacture, its components in contact with the food can be easily removed and accurately cleaned, and it is portable, thus being possible its use in any room in which there is an electric socket.

The necessities of modem life require specialized electric household appliances which allow to prepare the food in a hygienic and quick way, especially at breakfast, when the available time is little and valuable. This necessity is particularly felt for anyone who is accustomed to the so called American breakfast, in which it is required to contemporarily prepare in the shortest time hot beverages and solid food, possibly without activating the stoves, which require to subsequently perform the cleaning of the kitchen and the used utensils.

Therefore, several electric household appliances have been provided, like toasters, teapots, coffee machines, boilers and similar devices. A kind of food particularly appreciated by many people in the morning is the scrambled eggs, which actually have to be prepared in a pan on the stove, or by means of electric household appliances which however require a continuous interaction between the user and the electric household appliance during the eggs cooking and mixing phase.

The electric household appliance according to the present invention now solves these problems, allowing to steam the food, in particular scrambled eggs, in a quick, easy and hygienic way, without needing to use the kitchen stoves, and also in a healthy way, without requiring butter or oil.

Furthermore, the electric household appliance according to the present invention allows to optimize the use of steam with respect to similar devices of the prior art, allowing to operate with greater safety and enabling the user to obtain the exact indication about reaching the proper cooking degree by the food placed inside the appliance.

Objects, characteristics and advantages of the appliance in question will be clear and evident from the following detailed description, with reference to the annexed figures of illustrative drawings, wherein:

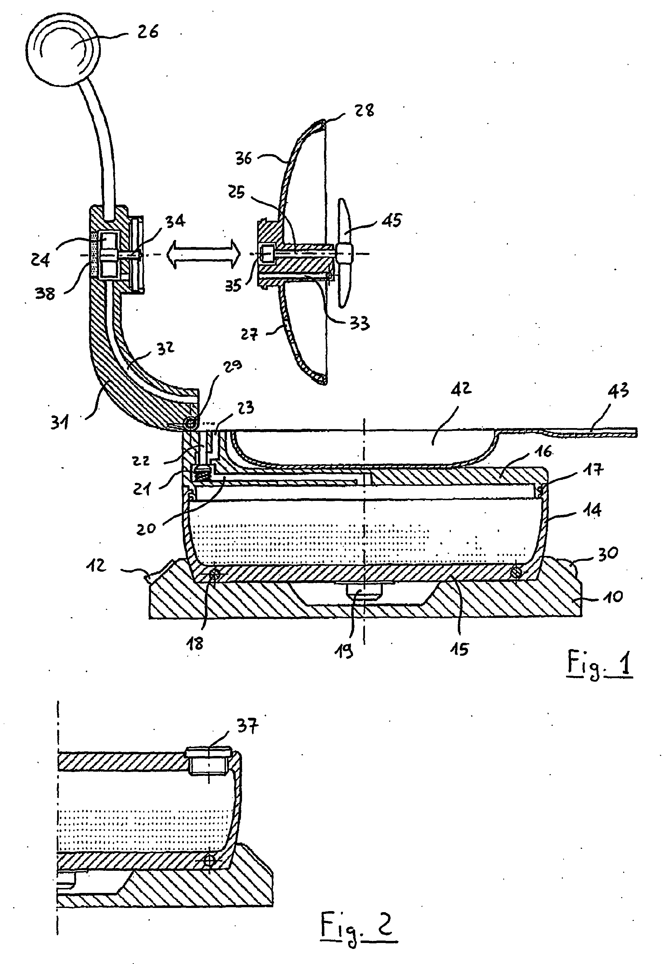

Figure 1 is a sectional view of the appliance, in opened position;
Figure 2 shows a detail of a component of the appliance;

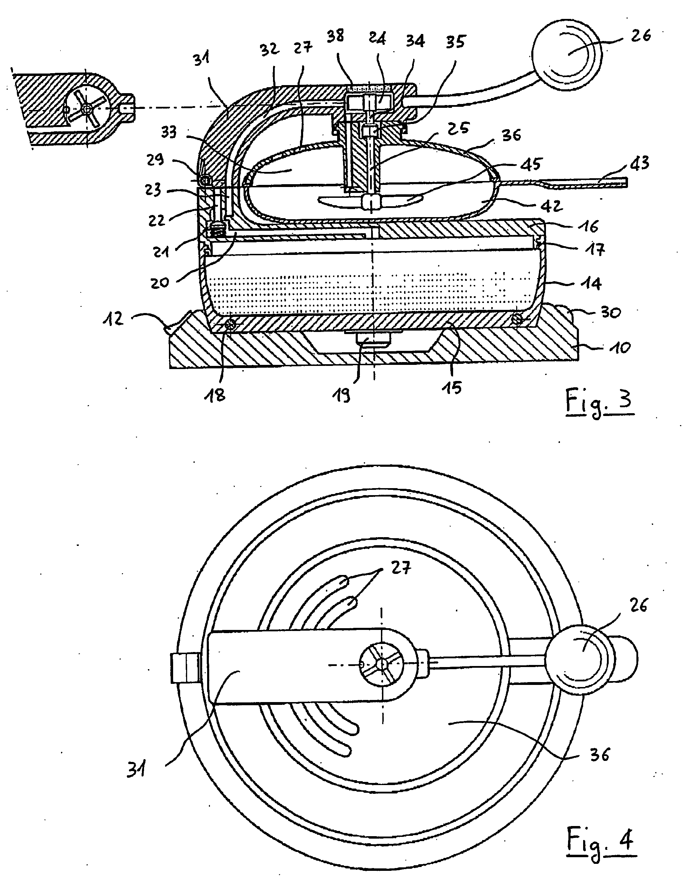

Figure 3 is a sectional view of the appliance assembled and ready to be used, and it shows a detail of the steam relief valve; and
Figure 4 is a top view of the appliance assembled and ready to be used.

Referring to the aforesaid figures of the annexed drawings, the appliance according to the present invention comprises an annular basement 10, in which an on/off switch 12, a pilot light 30, a feeding cable (not shown in the drawings) for the current input and the connection to the resistor (not shown too) contained in the appliance's body are provided.

The appliance's body is disposed in the basement 10, said body consisting of two components 14, 16, one engageable with the other for instance by a couple of screwing turns 17. The lower component 14 forms the water tank and comprises the resistor 18, embedded in said component's bottom 15, for heating the water, and the thermostat 19 applied below it. The upper component 16 forms a bearing surface, inside which the conduit 20 for the steam passage, the valve 21 which allows or prevents the passage of the steam in the conduit 23 and the piston pin 22 for controlling the valve 21 are arranged. In the upper component 16 a cap 37 is furthermore present, able to allow the loading of the water inside the tank 14 and normally provided with a safety valve. An arm 31, comprising a conduit 32 matching the conduit 23, is hinged to the body 16 by a torsion spring 29, said arm 31 furthermore comprising a turbine 24 splined on a shaft 34. The arm 31 ends with a handling knob 26, made of wood or of other thermal insulating material. In the upper portion of the arm 31, over the turbine 24, a disc 38 made of transparent material, like glass or the like, is placed, allowing the user to control the actual rotation of the turbine 24 during the appliance working.

The appliance according to the present invention further comprises a pan-shaped container 42, provided with a handle 43 made of thermal insulating material, in which the food to be cooked is placed, and a lid 36, provided with seal gaskets 28 and one or more slits 27 for the steam outlet, suitable for being coupled with said container 42. Said lid 36 is engageable under the arm 31, for instance by fitting or by screwing turns, and it comprises a pin 35 able to be inserted in the shaft 34, to transfer the motion of said shaft 34 to a mixing rod 25 ending with a device consisting of rotating blades 45, and a conduit 33, forming a continuation of the conduit 32 obtained in the arm 31, which allows the diffusion of the steam inside the container 42, where the food to be cooked is placed.

To enable the working of the appliance, once disposed the eggs or other food to be cooked inside the container 42, the user acts on the handling knob 26, in order to bring together the lid 36 and the container 42 for granting the seal. With this movement, the piston pin 22, acting on the spring of the valve 21, opens said valve 21, allowing the steam generated in the lower component 14 of the appliance and conveyed in the conduit 20 to pass in the subsequent conduit 23 and thus in the conduits 32 and 33, said steam reaching at last the container 42, where it will be used for cooking the food. The user maintains pressed the lid 36 on the container 42 for all the cooking time. Advantageously, the steam under pressure furthermore produces the movement of the turbine 24, and consequently of the bladed device 45, which allows the automatic mixing of the food during its cooking phase. Once the eggs or the food placed inside the container 42 are cooked, because of the greater friction, due for instance to the eggs solidification, encountered by the bladed device during its rotating movement, or when the vapor pressure exceeds a predetermined limit value, the stopping of the turbine 24 occurs. The user, seeing through the transparent disc 38 said stopping of the turbine 24, releases the handling knob 26: the arm 31 thus returns to its vertical position, pushed by the torsion spring 29, while the piston pin 22, returning to its rest position, causes the closure of the valve 21 and consequently blocks the access of the vapor in the conduit 23.

From performed tests it was noticed that the food is properly cooked in a surprisingly short time, thus obtaining also a saving of time and electric energy.

The appliance according to the present invention could be made of the most suitable metallic and/or plastic materials, according to the function of its different components, while the handling knob 26 of the element 31 and/or the handle 43 of the container 42 could be made of wood or other thermal insulating material. The interior of the container 42 will be preferably coated with anti-adherent material.

It is therefore evident that the appliance fully achieves the intended objects, but alterations, additions and/or replacements of elements could be made without falling outside the scope of protection of the invention, as it is also defined in the appended claims. For example, the position of the valves for supplying and discharging the steam, the housing system of the container in the upper component of the body and/or the joining system of the two components of the body could be different from that shown in the drawings.

## Claims

1. An electric household appliance for steam cooking comprising: a basement (10), in which an on/off switch (12) and a pilot light (30) are provided; a body formed by two components, whose lower component (14) comprises the water tank and the resistor (18) for its heating, while the upper component (16), forming a bearing surface, comprises at least a conduit (20) for the steam passage; a container (42) for the food to be cooked, to be placed on the bearing surface of the upper component (16) of the body, **characterized in that** an arm (31) is hinged to said upper component (16), comprising at least a conduit (32) for the steam passage, and a lid (36) for said container (42), engageable under the arm (31), comprising at least a device (45) for mixing the food and at least a conduit (33) forming a continuation of said at least a conduit (32) obtained in said arm (31), which allows the diffusion of the steam in said container (42) for cooking the food.

2. The appliance according to claim 1, **characterized in that** the passage of the steam from the upper component (16) of said appliance to said arm (31) is governed by at least a spring valve (21).

3. The appliance according to claim 2, **characterized in that** said spring valve (21) comprises at least a control piston pin (22), activated by said arm (31) when such arm is brought in its closure position by the user to start the food cooking.

4. The appliance according to the preceding claims, **characterized in that** said arm (31) comprises at least a turbine (24) activated by the steam under pressure introduced in said conduit (32) by the opening of said spring valve (21).

5. The appliance according to claim 1, **characterized in that** said arm (31) is hinged to the upper component (16) of said appliance by a torsion spring (29), which allows the automatic interruption of the steam delivery when the user releases said arm (31).

6. The appliance according to the preceding claims, **characterized in that** said food mixing device (45) consists of rotating blades activated by the rotation of said turbine (24) through a mixing rod (25).

7. The appliance according to claim 1, **characterized in that** said lid (36) is joined to said arm (31) by screwing.

8. The appliance according to claim 1, **characterized in that** said lid (36) is joined to said arm by fitting.

9. The appliance according to claim 1, **characterized in that** in the upper portion of said arm (31), over the turbine (24), a disc (38) made of transparent material is placed, allowing the user to control the actual rotation of the turbine (24) during the working of said appliance.

10. The appliance according to claim 1, **characterized in that** said lid (36) comprises at least a slit (27) for the steam outlet during the food cooking phase.

11. The appliance according to claim 1, **characterized in that** said arm ends with a handling knob (26) made of thermal insulating material.

12. The appliance according to claim 1, **characterized in that** said container (42) is provided with a handle (43) made of thermal insulating material.

13. The appliance according to claim 1, **characterized in that** said upper component (16) of said appliance comprises a cap (37), provided with a safety valve, for loading the water in the tank (14).

## Patentansprüche

1. Elektrisches Haushaltsgerät zum Dampfkochen mit den folgenden Merkmalen: einer Unterlage (10), auf die ein Schalter (12) und eine Anzeigelampe (30) angebracht sind; einem zweiteiligen Körper, dessen Unterteil (14) den Wasserbehälter und den elektrischen Widerstand (18) für die Wasserheizung enthält, während der die Auflagefläche bildende Oberteil (16) mindestens eine Dampfleitung (20) aufweist; einem Gefäss (42) für die kochenden Speisen, das auf die besagte Auflagefläche des Oberteils (16) aufgelegt werden soll; **dadurch gekennzeichnet, dass** ein Arm (31) auf den Oberteil (16) des Körpers aufgeklappt ist, der mindestens eine Dampfleitung (32) und einen Deckel (36) für das Gefäss (42) aufweist; dass der Deckel (36) unter den Arm (31) eingerastet werden kann und mindestens eine Einrichtung um die Speisen zu rühren und mindestens eine Leitung (33) aufweist, die eine Verlängerung der Dampfleitung (32) bildet und die Dampfdiffusion innerhalb des Gefässes (42) gestattet, um die Speisen zu kochen.

2. Gerät nach Anspruch 1, **dadurch gekennzeichnet, dass** der Dampfdurchfluss aus dem Oberteil (16) nach den Arm (31) von mindestens einem Federventil (21) geregelt ist.

3. Gerät nach Anspruch 2, **dadurch gekennzeichnet, dass** das Federventil (21) mindestens eine vom Arm (31) betätigte Steuerspindel (22) aufwiest, als der Arm (31) in die Schlussstellung vom Benutzer gebracht wird, um das Speisekochen anzufangen.

4. Gerät nach den vorhergehenden Ansprüchen, **dadurch gekennzeichnet, dass** der Arm (31) mindestens eine Turbine (24) aufweist, die vom durch die Öffnung des Federventils (21) in die Leitung (32) eingeführten Druckdampf betätigt wird.

5. Gerät nach Anspruch 1, **dadurch gekennzeichnet, dass** der Arm (31) an den Oberteil (16) durch eine Drehfeder (29) aufgeklappt ist, die die automatische Unterbrechung der Dampfversorgung gestattet, als der Benutzer den Arm (31) freigibt.

6. Gerät nach den vorhergehenden Ansprüchen, **dadurch gekennzeichnet, dass** die Einrichtung für das Speisenrühren aus Drehschaufeln besteht, die von der Drehbewegung der Turbine (24) durch einen Rührschaft betätigt werden.

7. Gerät nach Anspruch 1, **dadurch gekennzeichnet, dass** der Deckel (36) mit dem Arm (31) durch Schrauben verbunden ist.

8. Gerät nach Anspruch 1, **dadurch gekennzeichnet, dass** der Deckel (36) mit dem Arm (31) durch Einstecken verbunden ist.

9. Gerät nach Anspruch 1, **dadurch gekennzeichnet, dass** eine durchsichtige Scheibe (38) an der Oberfläche des Arms (31) gegenüber der Turbine (24) angeordnet ist, um dem Benutzer die Feststellung der aktuellen Drehung der Turbine (24) beim Betrieb des Geräts zu gestatten.

10. Gerät nach Anspruch 1, **dadurch gekennzeichnet, dass** der Deckel (36) mindestens eine Spaltung (27) für den Dampfausweg während des Speisenkochens aufweist.

11. Gerät nach Anspruch 1, **dadurch gekennzeichnet, dass** der Arm (31) in einen Handgriff (26) aus wärmeisolierendem Werkstoff ausläuft.

12. Gerät nach Anspruch 1, **dadurch gekennzeichnet, dass** der Deckel (36) einen Stiel (43) aus wärmeisolierendem Werkstoff ausweist.

13. Gerät nach Anspruch 1, **dadurch gekennzeichnet, dass** der Oberteil (16) einen mit Sicherheitsventil versehenen Propfen (37) aufweist, um das Wasser in den Behälter (14) anzufüllen.

## Revendications

1. Appareil électroménager de cuisson à la vapeur, comprenant : une base 10 dans la quelle un interrupteur d'allumage 12 et une lampe témoin 30 sont appliqués ;un corps en deux parties, dont la partie inférieur 14 comprend le réservoir de l'eau et la résistance électrique(18) pour son chauffage, tandis que la partie supérieure (16) formant la surface d'appui comprend au moins un conduit(20) pour le passage de la vapeur ; un récipient(42) pour les aliments à cuire qui peut être placé sur la surface d'appui de la partie supérieure du corps ; **caractérisé en ce que** à la partie supérieure(16) susdite un bras(31) est fixé à charnière, comprendant au moins un conduit32 pour le passage de la vapeur et un couvercle (36) pour le récipient(42) susdit, qui peut être mis au dessous du bras (31) et incorporant au moins un dispositif (45) pour remuer les aliments et au moins un conduit (33) comme prolongement du dit conduit (32) du bras(31), permettant la diffusion de la vapeur à l'intérieur du dit récipient pour la cuisson des aliments,

2. Appareil selon la revendication 1, **caractérisé en ce que** le passage de la vapeur de la partie supérieure de l'appareil au dit bras(31)est réglé par au moins une soupape à ressort(21).

3. Appareil selon la revendication 2, **caractérisé en ce que** la dite soupape à ressort(21) comprend au moins un bâtonnet de commande (22) actionné par le dit bras (31) lors qu'il est amené en position de fermeture par l'usager pour commencer la cuisson des aliments.

4. Appareil selon les revendications précédentes, **caractérisé en ce que** le dit bras (31) comprend au moins une turbine (24) actionnée par la vapeur sous pression introduite dans le conduit(32) par l'ouverture de la soupape à ressort(21)

5. Appareil selon la revendication 1, **caractérisé en ce que** le dit bras (31) est fixé a la partie supérieure de l'appareil par un ressort de torsion(29) permettant l'interruption automatique du débit de la vapeur lorsque l'usager relâche le bras(31).

6. Appareil selon les revendications précédentes, **caractérisé en ce que** le dit dispositif (45) pour remuer les aliments est formé par des aubes tournantes actionnées par la rotation de la dite turbine (24) moyennant une tige de mélange(25).

7. Appareil selon la revendication 1, **caractérisé en ce que** le dit couvercle (36) est joint au dit bras (31) par vissage.

8. Appareil selon la revendication 1, **caractérisé en ce que** le dit couvercle(36) est joint au dit bras (31) par assemblage.

9. Appareil selon la revendication 1, **caractérisé en ce que** dans la partie supérieure du dit bras (31) en correspondance avec la turbine(24) un disque (38) en matière transparente est placé, permettant à l'usager de contrôler la rotation réelle de la turbine (24) pendant le fonctionnement de l'appareil.

10. Appareil selon la revendication 1, **caractérisé en ce que** le dit couvercle (36) comprend au moins une fente(27) pour l'échappement de la vapeur pendant la cuisson des aliments.

11. Appareil selon la revendication 1, **caractérisé en ce que** le dit bras(31) se termine par un pommeau de prise (27) fabriqué en matière thermoisolante.

12. Appareil selon la revendication 1, **caractérisé en ce que** le dit récipient (42) est pourvu d'un manche(43) fabriqué en matière thermoisolante.

13. Appareil selon la revendication 1, **caractérisé en ce que** le dite partie supérieure de l'appareil comprend un bouchon(37) pour le chargement de l'eau dans le réservoir(14), pourvu d'une soupape de sûreté.
